# EUROPÄISCHE PATENTSCHRIFT

(11) **EP 3 685 069 B1**
(45) Veröffentlichungstag und Bekanntmachung des Hinweises auf die Patenterteilung: **14.07.2021**
(21) Anmeldenummer: 17791571.7
(22) Anmeldetag: 21.09.2017
(51) Int. Cl.: F16D 65/56, F16D 65/60

(54) **SCHEIBENBREMSE MIT EINER ZUSPANNEINRICHTUNG**
DISC BRAKE ACTUATOR
ACTIONNEUR D'UN FREIN A DISQUE

(43) Veröffentlichungstag der Anmeldung: 29.07.2020
(73) Patentinhaber: ZF CV Systems Europe BV, 1170 Brussels (BE)
(72) Erfinder: GROSSKOPF, Ralf, 74931 Lobach (DE); HENNING, Paul, 68723 Schwetzingen (DE); STRZALA, Wieslaw, 46-220 Byczyna (PL)
(74) Vertreter: Copi, Joachim
(86) Internationale Anmeldenummer: PCT/EP2017/001120
(87) Internationale Veröffentlichungsnummer: WO 2019/057263

(56) Entgegenhaltungen:
- EP-A1- 3 051 169
- EP-A1- 3 126 703
- EP-A2- 2 538 104
- DE-A1- 4 034 165
- DE-A1-102014 017 438
- DE-A1-102014 101 341
- DE-U1-202014 002 459

## Beschreibung

Die Erfindung betrifft eine Nachstellvorrichtung für eine Scheibenbremse zum Nachstellen des Verschleißes bei Bremsbelägen. Die Nachstellvorrichtung umfasst eine Führungshülse, in der eine Schlingfeder angeordnet ist, einen Nutring, der die Führungshülse umgreift, wobei der Nutring über eine Torsionsfeder mit einer Verschlusskappe gekoppelt ist und einen, den Nutring umgreifenden, Öffnungsring.

Zuspanneinrichtungen mit einer Nachstellvorrichtung, zum Nachstellen des Lüftspiels zwischen dem Bremsbelag und der Bremsscheibe, sind hinlänglich bekannt. Generell sind derartige Scheibenbremsen in der Regel pneumatisch oder elektromechanisch betätigbar.
Im Nutzfahrzeugbereich gibt es beispielsweise mechanische Nachstellvorrichtungen für Nutzfahrzeugscheibenbremsen. Die Zuspanneinrichtungen haben bei Scheibenbremsen die Aufgabe, ein gleichmäßiges Lüftspiel in allen Fahrsituationen oder Bremssituationen bereit zu stellen, was wiederum eine sehr hohe Präzision in der Nachstellung erfordert. Das Lüftspiel der Abstand zwischen den Bremsbelägen und der Bremsscheibe. Im Falle einer Bremsbetätigung muss das vorhandene Lüftspiel, bis zur Anlage des Bremsbelags an der Bremsscheibe, mittels der Zuspanneinrichtung überwunden werden. Das Lüftspiel ist beispielsweise ausschlaggebend für den Schwenkbereich eines zur Zuspannung dienenden Drehhebels und somit die maximal aufzubringende Bremskraft bzw. die Bremskraftreserve. Tritt im Falle einer Bremsung des Fahrzeugs eine Abweichung des Lüftspiels vom Soll-Wert auf, wird die Nachstellvorrichtung betätigt. Mit anderen Worten, werden im Falle einer Abweichung vom Soll-Wert, d.h. einer Vergrößerung des Lüftspiels aufgrund eines Verschleißes der Bremsbeläge und/oder der Bremsscheibe, die Bremsbeläge selbstständig mittels der Nachstellvorrichung verstellt. Die Verstellung kann beispielsweise durch eine Verstellbewegung von Druckstempeln erfolgen.

Eine Möglichkeit zeigt die EP3051169 A2, bei der sich die Schlingfeder, an der Drehhebel abgewandten Seite, an einer Unterlegscheibe abstützt. Damit soll eine axiale Verschiebung in Richtung der Bremsscheibe vermieden werden.

Die EP3126703 A1 hingegen weist zwei Schlingfedern auf, welche innerhalb einer Hülse angeordnet sind und sich axial, in Richtung der Bremsscheibe, an der Hülse abstützen.

Die gleiche Art der Abstützung, wie sie in der EP3126703 gezeigt ist, wird auch in der DE202014002459 U1 angewendet. Allerdings stützt sich hier eine Freilauffeder an einer inneren Aufnahmehülse ab.

Die DE102014101341 A1 wiederum beschreibt ein Abstützen der Schlingfeder, längs in Richtung der Bremsscheibe, radial gegen ein Nachstellelement.

Eine andere Nachstellvorrichtung geht beispielsweise aus der DE10 2014017438 A1 hervor. Dabei weist die Nachstellvorrichtung eine Schlingfeder mit einem abstehenden Federende auf, das in eine Halteöffnung der Führungshülse eingreift oder einen Vorsprung der Führungshülse in Umfangsrichtung schlingförmig umgreift. Die Schlingfeder ist somit axial fest positioniert. Zwischen der Führungshülse und dem abstehenden Federende der Schlingfeder ist in Umfangsrichtung ein Abstand bzw. eine Lücke vorhanden, welche bei einer Verschleißnachstellung der Bremsbeläge nicht kompensiert werden kann. Die Folge ist eine längere Reaktionszeit der Scheibenbremse. Die Bremsbeläge benötigen daher eine längere Zeit zur Überwindung des Lüftspiels, bis zum Kontakt mit der Bremsscheibe. Das Lüftspiel ist zwischen den Bremsbelägen und der Bremsscheibe vorhanden und verhindert ein Schleifen der Bremsbeläge an der Bremsscheibe im ungebremsten Zustand.

Die Erfindung liegt der Aufgabe zugrunde, die Nachteile aus dem Stand der Technik zu überwinden und eine Nachstellvorrichtung, sowie ein Verfahren für eine Nachstellvorrichtung bereitzustellen, die eine Vergrößerung des Lüftspiels zwischen den Bremsbelägen und der Bremsscheibe verhindert.

Die Aufgabe wird erfindungsgemäß dadurch gelöst, dass die Nachstelleinrichtung einen Zwischenring zur Überwindung des Spiels zwischen einer Führungshülse und einer Schlingfeder aufweist.

Durch die Überwindung des Spiels zwischen der Führungshülse und der Schlingfeder wird während eines Bremsvorgangs der Abstand zwischen den Bremsbelägen und der Bremsscheibe verkleinert oder vollständig überwunden. Dadurch verbessert sich die Reaktionszeit. Die Reaktionszeit ist die Zeit von der Ausgangsstellung der Bremsbeläge, bis zum Kontakt mit der Bremsscheibe, zur Überwindung des Lüftspiels. Zudem sind die Bremskräfte höher, da das Spiel zwischen der Schlingfeder und der Führungshülse während eines Zustellvorgangs der Scheibenbremse nicht überwunden werden muss. Als Bremskraft wird die Kraft bezeichnet, mit der die Bremsbeläge an der Bremsscheibe während eines Bremsvorgangs anliegen.

In einer weiteren vorteilhaften Ausgestaltung weist der Zwischenring mindestens eine Nase zum Abstützen der Schlingfeder in Umfangsrichtung auf. In dem Zwischenring sind nebeneinander, mit einem definierten Abstand, zwei rinnenförmige Vertiefungen ausgebildet, die auch Sicken genannt werden. Der Abstand muss so breit sein, das sichergestellt ist, dass die Schlingfeder unter Berücksichtigung von Verformungen freigängig ist. Die Nase kann so breit ausgestaltet sein, wie eine U-förmige Erhebung der Schlingfeder es erlaubt, ohne das die Schlingfeder in den zwei Sicken eingeklemmt wird. Der Zwischenbereich der ersten Sicke und der zweiten Sicke bildet die Nase. Die Sicken können eine unterschiedliche Form aufweisen oder unterschiedlich ausgestaltet sein. Die Nase steht somit nicht von dem Zwischenring ab oder ist an dem Zwischenring angeformt.

Zudem weist der Zwischenring vorteilhaft mindestens einen Anschlag gegen ein Verdrehen des Nutrings in Umfangsrichtung auf. Der Anschlag ist, entgegengesetzt der Richtung der Nase, aus dem Zwischenring gebildet. An dem Anschlag stützt sich der Nutring ab, wobei der Anschlag eine Anschlagsfläche aufweist, an dem der Nutring anliegt. Die Anschlagsfläche ist vorzugsweise eben ausgestaltet.

Darüber hinaus weist der Zwischenring vorteilhaft mindestens eine Begrenzung zur Verhinderung einer Bewegung des Öffnungsrings in axialer Richtung auf. Die Begrenzung ist, entgegengesetzt der Richtung der Nase des Zwischenrings, radial an dem Zwischenring angeordnet oder angeformt. Die Begrenzung ist vorteilhaft als quadratischer oder als rechteckiger Körper ausgebildet. Die Begrenzung kann aber auch jede andere beliebige Form aufweisen, die eine Bewegung des Öffnungsrings in axialer Richtung, also in Richtung des Zwischenrings verhindert.

Es hat sich zudem als Vorteil erwiesen, dass der Zwischenring aus einem einzigen durchgängigen Formteil oder aus einem offenen Formteil besteht. Der Zwischenring ist vorzugsweise aus Metall hergestellt. Er kann aber auch aus einem Kunststoff oder einem anderen Material hergestellt werden. Der Zwischenring ist ein durchgängiges Formteil, wenn der Zwischenring aus einem rohrförmigen Körper geschnitten oder aus einem rohrförmigen Körper abgetrennt wurde. Als offener Zwischenring ist ein Zwischenring zu verstehen, bei dem ein Streifen aus einer Platte geschnitten, gestanzt oder herausgetrennt wird und der Streifen in einem weiteren Schritt als Zwischenring umgeformt wird. Der Zwischenring weist einen ersten und einen zweiten Endabschnitt auf, die nicht miteinander verbunden bzw. nicht verschlossen werden. Der offene Zwischenring bleibt somit dehnbar, wodurch er an Führungshülsen mit unterschiedlichen Durchmessern angebracht werden kann.

In einer weiteren vorteilhaften Ausgestaltung weist der Zwischenring, an der Innenseite, mindestens einen Vorsprung, vorzugsweise vier Vorsprünge, zur Befestigung des Zwischenrings an der Führungshülse in radialer Richtung auf.
Der Vorsprung ist vorteilhaft aus dem Zwischenring geformt. Denkbar ist, dass der Vorsprung mittels Pressverfahren, Stanzverfahren oder mittels Gussverfahren ausgeformt wird. Bei dem Pressvorgang wird der Zwischenring über die Führungshülse geschoben, in Position gebracht und anschließend mit der Führungshülse zusammen gepresst. Bei dem Pressvorgang werden auch die Vorsprünge ausgeformt. Der Vorsprung kann aber auch als zusätzliches Bauteil an der Innenseite des Zwischenrings angeordnet sein. Der Vorsprung des Zwischenrings wird anschließend in eine entsprechende Vertiefung in der Führungshülse angeordnet. Anstatt einem Vorsprung sind auch mindestens zwei Vorsprünge denkbar, die eine Bewegung in axialer Richtung und in Umfangsrichtung verhindern. Darüber hinaus kann der Zwischenring vorteilhaft über eine Schweißverbindung mit der Führungshülse verbunden sein. Dabei wird der Zwischenring auf der Führungshülse positioniert und anschließend mit einem entsprechenden Werkzeug verschweißt, sodass eine Bewegung des Zwischenrings in axialer Richtung und in Umfangsrichtung nicht mehr möglich ist. Weiterhin ist es denkbar, dass der Zwischenring über eine Klebeverbindung mit der Führungshülse verbunden ist. Die Kleberverbindung ist eine nicht lösbare Verbindung, weshalb der Zwischenring sowohl axial, als auch in Umfangsrichtung fest mit der Führungshülse verbunden ist. Zur Vermeidung einer Bewegung des Zwischenrings in axialer Richtung, ist es auch denkbar, dass die Führungshülse vorteilhaft an einem axialen Ende, in Umfangsrichtung, gegenüberliegend zu einer Verschlusskappe, einen Flansch aufweist, an dem sich der Zwischenring abstützt. Der Flansch der Führungshülse sichert den Zwischenring gegen ein axiales Verrutschen von der Führungshülse und verhindert ein verklemmen des Zwischenrings mit der Schlingfeder. Zum einen ist der Zwischenring zusätzlich vor einem herunterrutschen von der Führungshülse gesichert, zum anderen vereinfacht es die Montage. Der Zwischenring und der Nutring können damit nacheinander, von der anderen Seite, d.h. entgegengesetzt der Seite mit dem Flansch, auf die Führungshülse geschoben werden, ohne das der Zwischenring und/oder der Nutring auf der anderen Seite, entgegengesetzt der Einschubseite, herunterrutschen kann.

Die Aufgabe wird zudem durch ein Verfahren zur Anordnung des Zwischenrings an der Führungshülse gelöst. Die Montagereihenfolge ist abhängig von der Ausführung der Nachstellvorrichtung. So unterscheidet sich die Montagereihenfolge für die Nachstellvorrichtung, bei dem die Führungshülse einen Flansch aufweist, von der Nachstellvorrichtung, bei dem der Zwischenring mittels eines Crimpprozess an der Führungshülse angebracht ist und die Verschlusskappe bereits mit der Führungshülse verschweißt ist. Dazu wird der Zwischenring an der Führungshülse angeordnet, nachdem die Schlingfeder in der Führungshülse angeordnet wurde. Darüber hinaus wird der Zwischenring an der Führungshülse, vor Anordnung des Nutrings an der Führungshülse angeordnet. Die Anordnung des Zwischenrings nach Anordnung des Nutrings vereinfacht die Positionierung des Zwischenrings an der Führungshülse. Im weiteren Schritt wird die Nase des Zwischenrings durch eine U-förmige Erhebung der Schlingfeder geführt. Anschließend wird der Zwischenring in Umfangsrichtung zugespannt und schließt das Spiel zwischen der Führungshülse und der Schlingfeder. Die U-förmige Erhebung der Schlingfeder stützt sich dabei in Umfangsrichtung an der Nase des Zwischenrings und an einem Anschlag an der Führungshülse ab. Danach wird vorteilhaft der mindestens eine Vorsprung des Zwischenrings in eine Vertiefung der Führungshülse eingepresst. Sofern kein Vorsprung an dem Zwischenring vorhanden ist, kann der Zwischenring mit der Führungshülse verschweißt oder verklebt werden. Weiterhin ist auch denkbar, dass sich der Zwischenring axial, an dem Flansch der Führungshülse abstützt. Es ist auch denkbar dass der Zwischenring mit der Führungshülse verpresst wird und sich an einem Flansch der Führungshülse abstützt.

Nachfolgend werden ausgewählte Ausführungsbeispiele der Erfindung anhand der beigefügten Figuren erläutert.

Es zeigt:
Fig. 1 eine Scheibenbremse mit einer Nachstellvorrichtung nach dem Stand der Technik,
Fig. 2 einen erfindungsgemäßen Zwischenring aus einem zusammengesetzten Formteil aus einer ersten seitlichen Perspektive,
Fig. 2a einen erfindungsgemäßen Zwischenring aus einem zusammengesetzten Formteil aus einer zweiten seitlichen Perspektive,
Fig. 2b einen erfindungsgemäßen Zwischenring aus einem zusammengesetzten Formteil aus einer zweiten seitlichen Perspektive mit einem Vorsprung,
Fig. 2c einen erfindungsgemäßen Zwischenring als durchgängiges Formteil,
Fig. 3 eine Nachstellvorrichtung mit einem erfindungsgemäßen Zwischenring nach Fig. 2c, in einer seitlichen gedrehten Perspektive,
Fig. 3a eine Führungshülse mit einem Zwischenring gemäß Fig. 3.
Fig. 3b eine Führungshülse nach Fig. 3 im Detail,
Fig. 4 eine Nachstellvorrichtung mit einem erfindungsgemäßen Zwischenring nach Fig. 2, in einer seitlichen gedrehten Perspektive,
Fig. 4a eine Führungshülse für eine Nachstellvorrichtung nach Fig. 4 mit Bohrungen in Umfangsrichtung,
Fig. 5 eine Führungshülse für eine Nachstellvorrichtung mit einem verschweißten Zwischenring,
Fig. 6 eine Zuspanneinrichtung einer Scheibenbremse mit einer Nachstellvorrichtung und einem erfindungsgemäßen Zwischenring, wobei sich der Zwischenring an einem Flansch der Führungshülse abstützt,
Fig. 7 eine Zuspanneinrichtung einer Scheibenbremse mit einer Nachstellvorrichtung und einem erfindungsgemäßen Zwischenring, wobei der Zwischenring an der Führungshülse verschweißt ist.

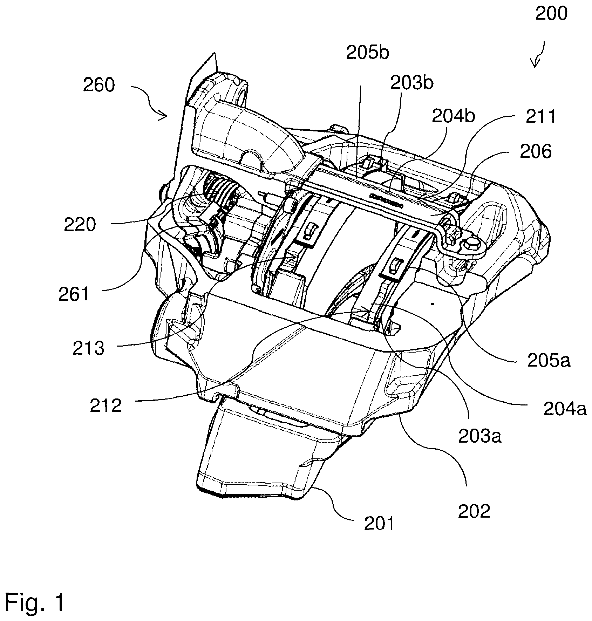

Fig. 1 zeigt eine Darstellung einer Scheibenbremse 200 für ein Nutzfahrzeug, mit einer Teilansicht einer Zuspanneinrichtung 260. Die Scheibenbremse 200 weist einen Bremssattel 202 und einen Bremsträger 201 auf. Der Bremssattel 202 ist als Gleitsattel ausgebildet. Weiterhin weist die Scheibenbremse 200 einen ersten Belagträger 203a und einen zweiten Belagträger 203b zum Halten der Reibbeläge 204a, 204b auf. Der erste Belagträger 203a und der erste Reibbelag 204a ist als erster Bremsbelag 212 bezeichnet. Der zweite Belagträger 203b und der zweite Reibbelag 204b ist als zweiter Bremsbelag 213 bezeichnet. Ein Niederhaltesystem 211, umfassend ein erste Niederhaltefeder 205a, eine zweite Niederhaltefeder 205b und einen Niederhaltebügel 206, verhindert ein herausrutschen der Bremsbeläge 212, 213 in radialer Richtung. Über die Zuspanneinrichtung 260 werden die Bremsbeläge 212, 213 im Falle einer Bremsbetätigung an eine nicht dargestellte Bremsscheibe angelegt, d.h. zugespannt. Die Zuspanneinrichtung 260 umfasst einen Drehhebel 261 zum Zuspannen der Bremsbeläge 212, 213 und eine Nachstellvorrichtung 220 zum Einstellen des Lüftspiels zwischen der Bremsscheibe und den Bremsbelägen 212, 213.

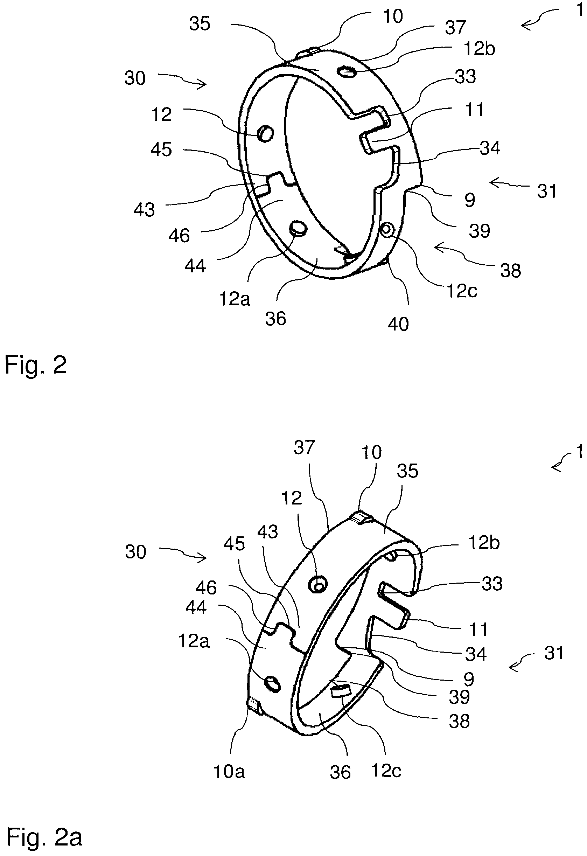

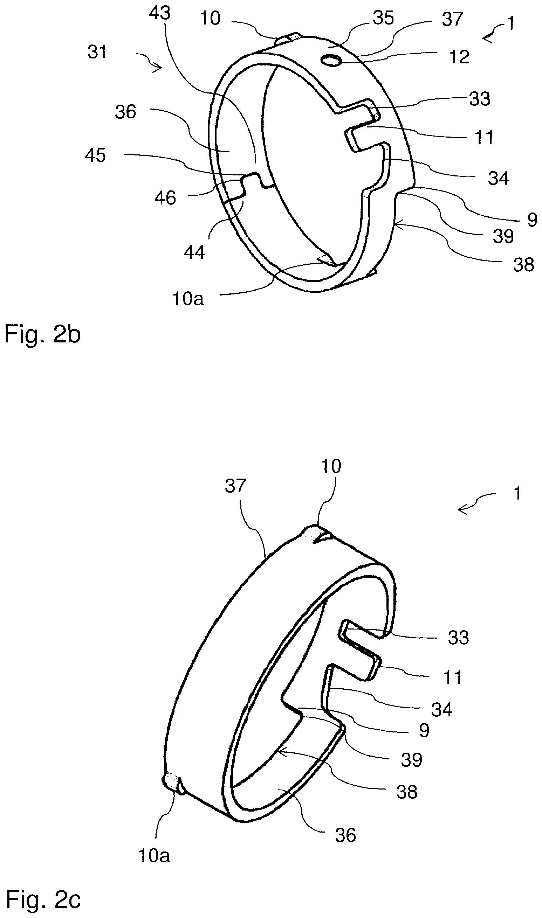

Fig. 2 zeigt einen Zwischenring 1, mit einer Vorderseite 30 und einer Rückseite 31, der als zusammengesetztes Formteil ausgebildet ist. Der Zwischenring 1 ist als Metallteil ausgebildet und weist einen Innendurchmesser von 39,6mm auf. Der Außendurchmesser des Zwischenrings beträgt 43,6mm. Die Wandstärke des Zwischenrings 1 beträgt in dem Ausführungsbeispiel 2mm. Der Zwischenring 1 weist eine Nase 11, einen Anschlag 9, eine Begrenzung 10, sowie einen ersten Vorsprung 12, einen zweiten Vorsprung 12a, einen dritten Vorsprung 12b und einen vierten Vorsprung 12c auf. Die Nase 11 ist axial in Richtung der Vorderseite 30 aus dem Zwischenring 1 geformt. Dazu ist axial von der Vorderseite 30 in Richtung der Rückseite 31 eine erste Sicke 33 und eine zweite Sicke 34 ausgebildet. Der minimale Abstand zwischen der ersten Sicke 33 und der Rückseite 31 beträgt 3,5mm. Der minimale Abstand zwischen der zweiten Sicke 34 und der Rückseite 31 beträgt ebenfalls 3,5mm. Die erste Sicke 33 und die zweite Sicke 34 sind in Umfangsrichtung parallel ausgebildet. Die erste Sicke 33 weist eine rechteckige Form auf. Die zweite Sicke 34 ist trapezförmig ausgebildet. Weiterhin ist die Begrenzung 10 des Zwischenrings 1 radial an einer Außenfläche 35 des Zwischenrings ausgebildet. Zudem ist die Begrenzung 10 an der Rückseite 31, an einem Randbereich 37 des Zwischenrings 1 angeordnet. Die Begrenzung 10 ist kein zusätzlich angeformtes Bauteil, sondern ein Teil des Zwischenrings 1. Weiterhin ist an der Rückseite 31 des Zwischenrings 1, ein Anschlag 9 aus dem Zwischenring 1 gestanzt. Eine erste Ecke 39 einer Nut 38 ist dabei rechtwinklig ausgebildet. Eine zweite Ecke 40 der Nut 38 weist einen Winkel auf, der größer als 45 Grad, bevorzugt zwischen 45° und 90° ist. Die axiale Wand der ersten Ecke 39 ist der Anschlag 9. An einer Innenfläche 36 des Zwischenrings 1, ist der erste Vorsprung 12, der zweite Vorsprung 12a, der dritte Vorsprung 12b und der vierte Vorsprung 12c aus dem Zwischenring 1 geformt. Die Vorsprünge 12, 12a, 12b, 12c wurden mittels Stanzverfahren aus dem Zwischenring 1 gebildet. In einem ersten Endabschnitt 43 des Zwischenrings 1 ist mittig in Umfangsrichtung eine Fuge 45 ausgebildet. In die Fuge 45 greift ein Stoß 46 eines zweiten Endabschnitts 44. Der Stoß 46 ist aus dem zweiten Endabschnitt 44 gestanzt. Der Zwischenring wird also mit allen Konturen, wie z.B. der Nase 11 oder der Begrenzung 10, zuerst aus einem Flachstahlband (Blech) gestanzt, zum Ring gerollt und anschließend am Stoß 46 mit der Fuge 45 formschlüssig verbunden. Die Vorsprünge 12, 12a, 12b werden erst nach der Positionierung des Zwischenrings 1 auf der Führungshülse 3, mit Hilfe eines Stanzwerkzeugs oder eines Presswerkzeugs aus dem Zwischenring gestanzt oder gepresst.

Fig. 2a zeigt den Zwischenring 1 nach Fig.2 aus einer weiteren seitlichen Perspektive. Anstatt wie in Fig. 2, bei dem der Zwischenring 1 eine Begrenzung 10 aufweist, weist der Zwischenring 1 nach Fig. 2a neben der Begrenzung 10, zusätzlich eine zweite Begrenzung 10a auf.

Eine weitere Möglichkeit der Ausgestaltung des Zwischenrings 1 nach Fig. 2a, zeigt die Fig. 2b. Entgegen der Fig.2a weist der Zwischenring nur einen Vorsprung 12 auf.

In Fig. 2c ist der Zwischenring 1 als durchgängiges Formteil dargestellt. Der Zwischenring 1 wurde in dem Ausführungsbeispiel aus einem Metallrohr geschnitten. Zusätzliche Arbeitsschritte, wie dies bei der Ausführung gemäß Fig. 2, 2a und 2b nötig ist, entfallen. Weiterhin weist der Zwischenring 1 nach Fig. 2c, bis auf die Vorsprünge 12, 12a, 12b, 12c, alle Merkmale des Zwischenrings 1 nach Fig. 2a auf. Die Bezeichnung der Bezugszeichen entspricht der Bezeichnung der Bezugszeichen nach Fig. 2a.

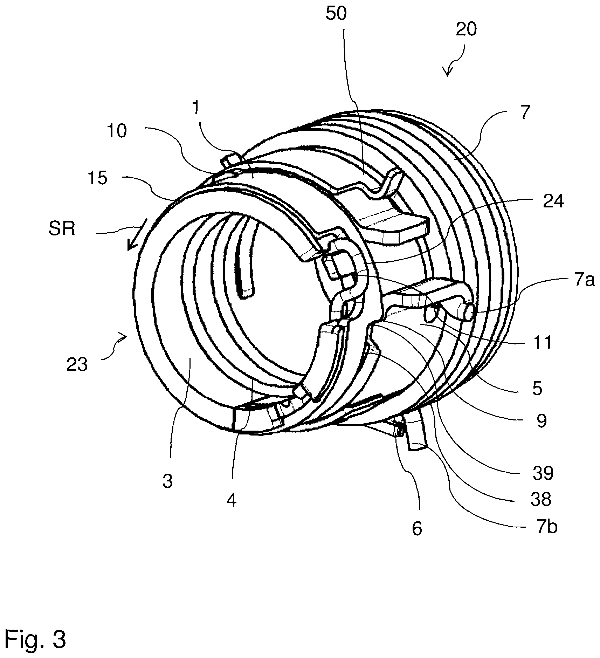

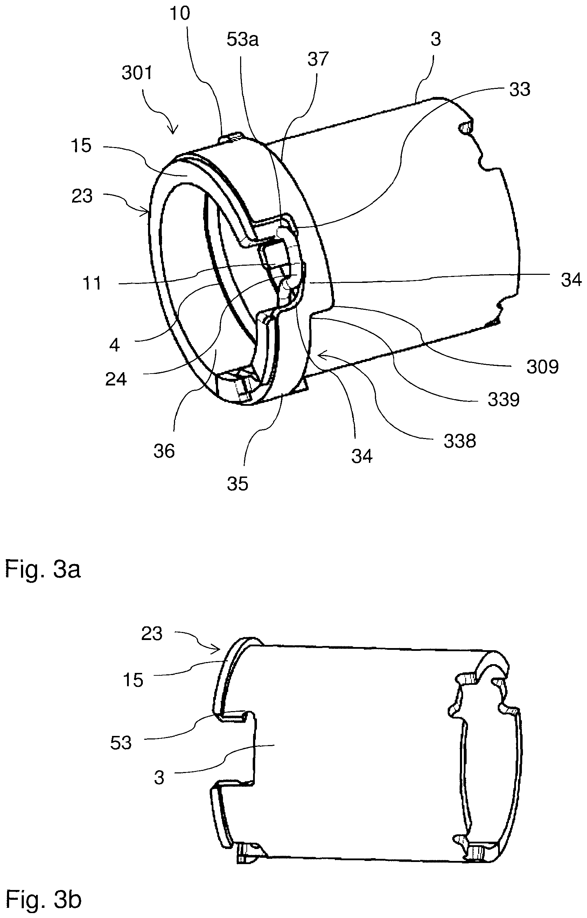

Wie der Zwischenring 1 nach Fig. 2c an einer Nachstellvorrichtung 20 einer Scheibenbremse angeordnet ist, zeigt Fig. 3. Die Nachstellvorrichtung 20 zeigt eine Führungshülse 3, die an einem Ende in Umfangsrichtung einen aus der Führungshülse angeformten Flansch 15 aufweist, an dem sich der Zwischenring 1 axial abstützt. Der Flansch 15 ist radial nach außen, entgegengesetzt der Führungshülse 3 gerichtet. In der Führungshülse 3 ist eine Schlingfeder 4 angeordnet. Die Schlingfeder 4 weist eine U-förmige Erhebung 24 auf, durch die die Nase 11 des Zwischenrings 1 greift. Die Umfangsrichtung ist in Fig. 3 als Sperrichtung SR definiert. In der ersten Ecke 39 der Nut 38 des Zwischenrings 1, stützt sich in Sperrichtung SR, an dem Anschlag 9, ein Nutring 5 ab. Der Nutring 5 umgreift die Führungshülse 3. Ein erstes Ende 7a einer Torsionsfeder 7 steht mit dem Nutring 5 in Eingriff. Ein zweites Ende 7b der Torsionsfeder 7 steht mit einer Verschlusskappe 6 in Eingriff. Die Torsionsfeder 7 weist eine Vorspannkraft auf. Durch die Vorspannkraft der Torsionsfeder 7, wird der Zwischenring 1 in Sperrichtung SR zu gespannt und schließt ein Spiel S zwischen der Führungshülse 3 und der Schlingfeder 4. Die Schlingfeder 4 ist somit zwischen der Führungshülse 3 und der Nase 11 des Zwischenrings 1 eingespannt. Zudem umgreift ein Öffnungsring 50 den Nutring 5. Der Öffnungsring 50 ermöglicht die Rückstellung der Nachstellvorrichtung 20 während eines Belagwechsels insoweit, dass die Schlingfederwirkung in Sperrichtung SR der Schlingfeder aufgehoben wird. In Fig. 3 ist die Wirkung des Öffnungsrings 50 nicht dargestellt, wobei der Öffnungsring 50 ein zweites Ende der Schlingfeder 4 gegen einen Anschlag des Öffnungsrings 50 drückt und die Sperrwirkung der Schlingfeder 4 aufhebt.

Wie der Zwischenring 1 an der Führungshülse 3 nach Fig. 3 im Detail angeordnet ist, zeigt Fig. 3a. Die Fig. 3b zeigt die Führungshülse 3 nach Fig. 3 ohne den Zwischenring 1. Dabei ist der Flansch 15, an den sich der Zwischenring 1 abstützt und eine Hinterschneidung 53, an der sich die U-förmige Erhebung 24 der Schlingfeder 4 abstützt, deutlich erkennbar.

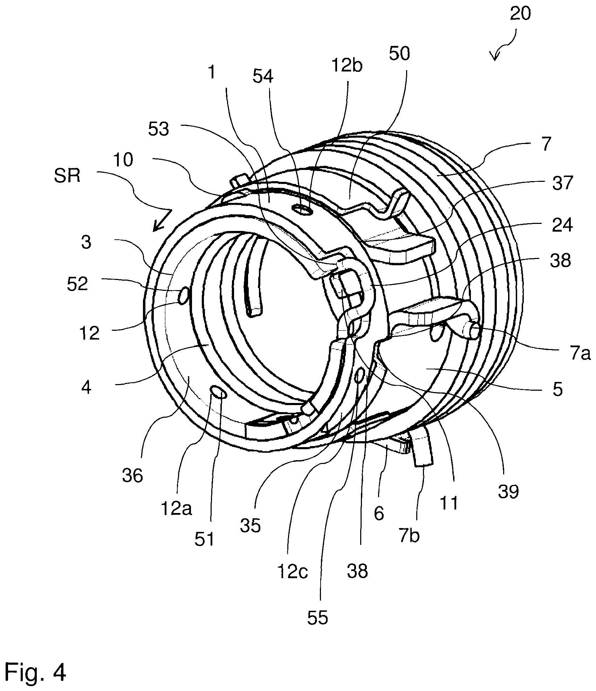

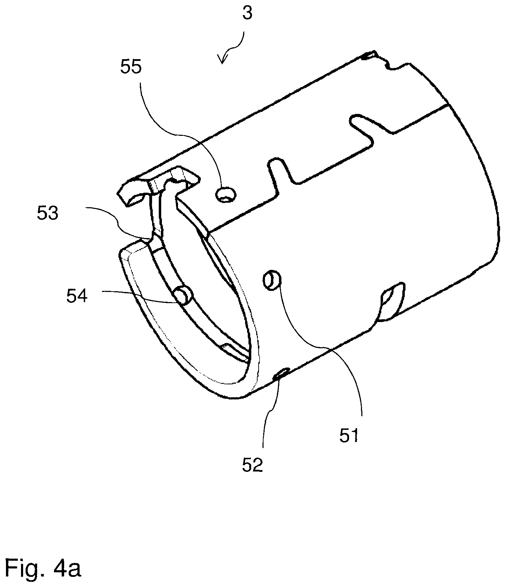

Fig. 4 zeigt eine Anordnung des Zwischenrings 1 nach Fig. 2, an der Nachstellvorrichtung 20. Die Nachstellvorrichtung 20 ist bis auf die Führungshülse 3 und dem Zwischenring 1 bauteilgleich mit der Nachstellvorrichtung 20 nach Fig. 3. Die Führungshülse 3 weist keinen Flansch 15 auf. Dabei zeigt Fig. 4 eine Schlingfeder 4, die eine U-förmige Erhebung 24 aufweist, durch die die Nase 11 des Zwischenrings 1 greift. Die U-förmige Erhebung 24 der Schlingfeder 4 stützt sich an der Hinterschneidung 53 der Führungshülse 3 ab. Die Führungshülse 3 weist in Umfangsrichtung ein erstes Loch 51, ein zweites Loch 52, ein drittes Loch 54 und ein viertes Loch 55 auf. Nachdem der Zwischenring 1 mit der Schlingfeder 4 an der Führungshülse 3 positioniert ist, werden die Vorsprünge 12, 12a, 12b und 12c des Zwischenrings 1 in die Löcher 51, 52, 54, 55 der Führungshülse 3 gepresst. Eine Bewegung des Zwischenrings 1 in axialer Richtung oder in Umfangsrichtung ist nicht möglich. Es ist in Umfangsrichtung somit kein Spiel S zwischen der Schlingfeder 4 und der Führungshülse 3 vorhanden.

Fig. 4a zeigt die Führungshülse 3 nach Fig. 4 im Detail.
Insbesondere sind die Bohrungen 51, 52, 54, 55 und die Hinterschneidung 53 sichtbar.

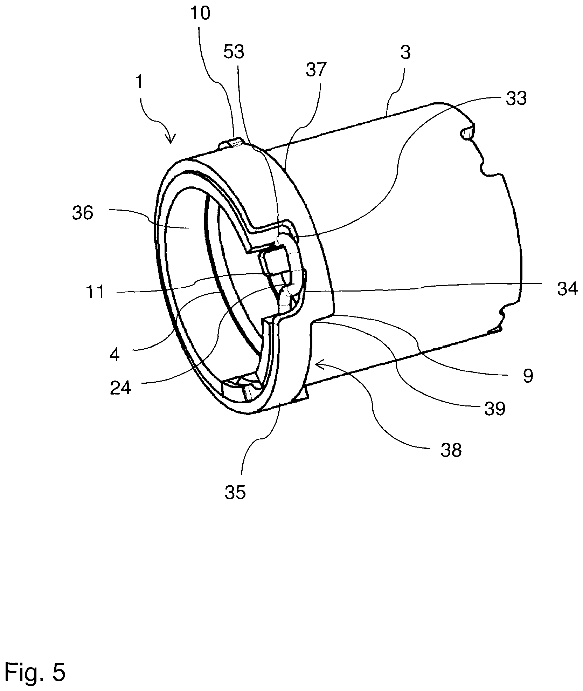

Fig. 5 zeigt eine weitere Möglichkeit, den Zwischenring 1 an die Führungshülse 3 der Nachstellvorrichtung 20 anzuordnen. Der Zwischenring 1 entspricht dem Zwischenring 1 nach Fig. 2c. Daher weist der Zwischenring 1 einen Anschlag 9, eine erste Begrenzung 10, eine erste Sicke 33 und eine zweite Sicke 34, eine Innenfläche 36 einen Randbereich 37 und eine Nut 38 auf. Die Schlingfeder 4 weist eine U-förmige Erhebung 24 auf, durch die die Nase 11 des Zwischenrings 1 greift. Die U-förmige Erhebung 24 stützt sich in Umfangsrichtung an der Hinterschneidung 53 der
Führungshülse 3 ab. Gegen ein Verdrehen in Umfangsrichtung ist der Zwischenring 1 an der Führungshülse 3 verschweißt.

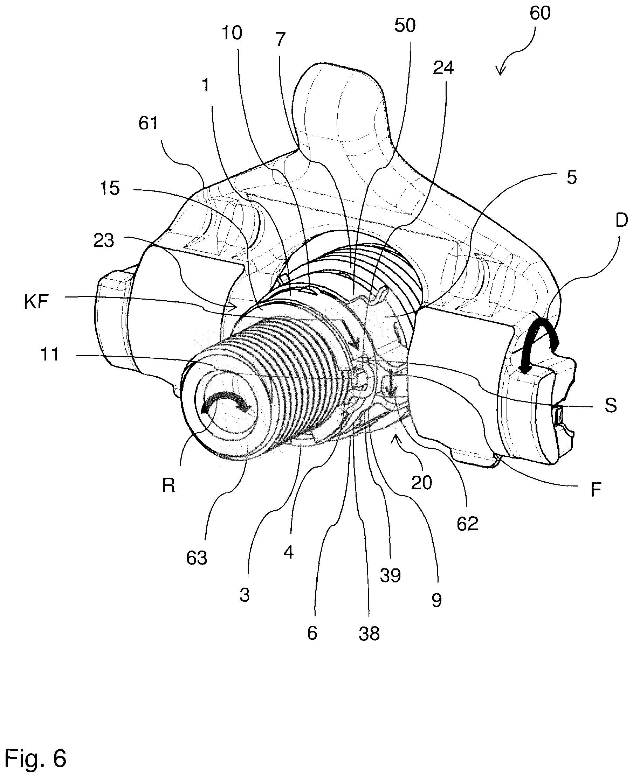

Fig. 6 zeigt eine Zuspanneinrichtung 60 mit der Nachstellvorrichtung 20 nach Fig. 3, die eine Spindel 63 umgreift und einem Drehhebel 61 mit einem Stift 62, der mit dem Nutring 5 der Nachstellvorrichtung 20 in Eingriff steht. Der Zwischenring 1 stützt sich axial an dem Flansch 15 der Führungshülse 3 ab. Zur Überwindung des Lüftspiels zwischen den Bremsbelägen und der Bremsscheibe, drückt während eines Bremsvorgangs der Stift 62 in Richtung einer Drehbewegung D des Drehhebels 61 auf den Nutring 5. Die Spindel 63 dreht sich dabei in Rotationsrichtung R. Nach Überwindung des Lüftspiels kann sich die Spindel 63 nicht mehr weiter in die Rotationsrichtung R drehen, da die Bremsbeläge an der Bremsscheibe anliegen. Die Torsionsfeder 7 dreht sich in Rotationsrichtung R. Mit der Drehung des Nutrings 5 in Rotationsrichtung R, liegt der Nutring 5 nicht mehr an dem Anschlag 9 des Zwischenrings 1 an. Der Nutring 5 drückt daher nicht mehr gegen den Zwischenring 1, wodurch der Zwischenring 1 nicht mehr an der U-förmigen Erhebung 24 der Schlingfeder 4 anliegt. Die Führungshülse 3 ist über die Verschlusskappe 6 und der Torsionsfeder 7, mit dem Nutring 5 verbunden. Auf die Schlingfeder 4 wirkt eine Kraft der Führungshülse KF und verhindert das Spiel S zwischen der Schlingfeder 4 und der Führungshülse 3. Nach Beendigung des Bremsvorgangs wird der Drehhebel 61 in seine Ausgangsstellung verbracht. Der Drehhebel 61 bewegt sich entgegengesetzt der Drehbewegung D. Dadurch bewegt sich der Nutring 5 und der Zwischenring 1 entgegengesetzt der Rotationsrichtung R. Die Nase 11 des Zwischenrings 1 drückt, entgegengesetzt der Rotationsrichtung R, gegen die U-förmige Erhebung 24 der Schlingfeder 4. Die Schlingfeder 4 wird demnach zwischen der Nase 11 des Zwischenrings 1 und der Führungshülse 3 verspannt. Ein mögliches Spiel S, das während des Bremsvorgangs zwischen der Schlingfeder 4 und der Führungshülse 3 aufgetreten ist, wird nachgestellt.

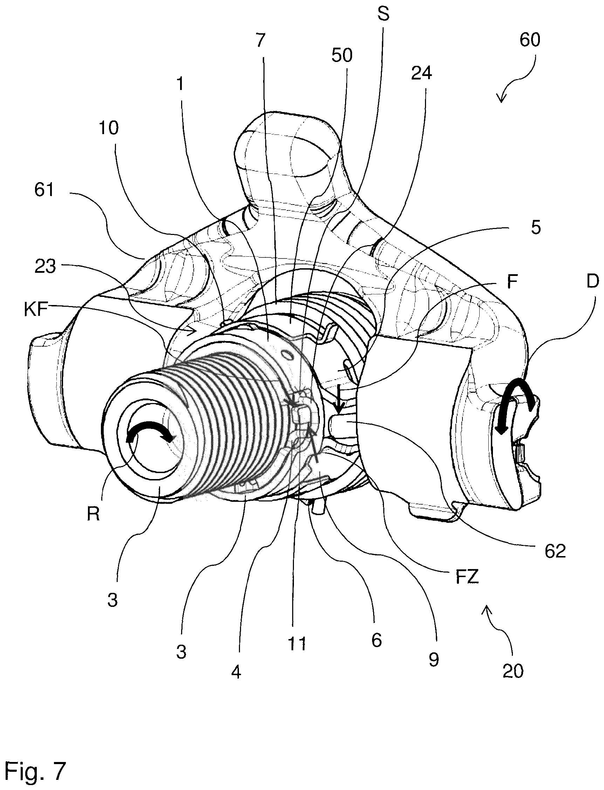

Fig. 7 zeigt eine Zuspanneinrichtung 60 mit einer Nachstellvorrichtung 20 und einem erfindungsgemäßen Zwischenring 1. Der Aufbau der Zuspanneinrichung 60 und der Nachstellvorrichtung 20 entspricht dem Ausführungsbeispiel nach Fig. 6, weshalb nicht näher darauf eingegangen wird. In dem Ausführungsbeispiel nach Fig. 7 ist der Zwischenring 1 verschweißt und damit fest mit der Führungshülse 3 verbunden. Unter einer festen Verbindung sind eine formschlüssige und eine kraftschlüssige Verbindung zu verstehen. Während eines Bremsvorgangs dreht sich der Zwischenring 1 nicht in Rotationsrichtung R mit. Die U-förmige Erhebung 24 bleibt demnach fest zwischen der Nase 11 des Zwischenrings 1 und der Führungshülse 3 eingespannt. Ein Spiel S zwischen der Nase 11 des Zwischenrings 1 und der Führungshülse 3 wird vermieden und ist daher nicht in Fig. 7 gezeigt. Allerdings weist dieses Ausführungsbeispiel den Nachteil auf, dass ein Spiel S zwischen der Nase 11 des Zwischenrings 701 und der Führungshülse 3 nicht mehr nachgestellt werden kann. Ein derartiges Spiel kann aufgrund von altersbedingten Abnutzungserscheinungen am Zwischenring 1, der Schlingfeder 4 oder an der Führungshülse 3 auftreten.

### Bezugszeichenliste als Teil der Beschreibung

### Bezugszeichenliste für die Fig. 2 bis Fig. 7

- 1: Zwischenring
- 3: Führungshülse
- 4: Schlingfeder
- 5: Nutring
- 6: Verschlusskappe
- 7: Torsionsfeder
- 7a: erstes Ende der Torsionsfeder 7
- 7b: zweites Ende der Torsionsfeder 7
- 9: Anschlag des Zwischenrings 1
- 10: erste Begrenzung des Zwischenrings 1
- 10a: zweite Begrenzung des Zwischenrings 1
- 11: Nase des Zwischenrings 1
- 12: erster Vorsprung des Zwischenrings 1
- 12a: zweiter Vorsprung des Zwischenrings 1
- 12b: dritter Vorsprung des Zwischenrings 1
- 12c: vierter Vorsprung des Zwischenrings 1
- 15: Flansch der Führungshülse 3
- 20: Nachstellvorrichtung
- 23: axiales Ende der Führungshülse 3
- 24: U-förmige Erhebung der Schlingfeder 4
- 30: Vorderseite des Zwischenrings 1
- 31: Rückseite des Zwischenrings 1
- 33: erste Sicke des Zwischenrings 1
- 34: zweite Sicke des Zwischenrings 1
- 35: Außenfläche des Zwischenrings 1
- 36: Innenfläche des Zwischenrings 1
- 37: Randbereich des Zwischenrings 1
- 38: Nut des Zwischenrings 1
- 39: erste Ecke der Nut 38
- 40: zweite Ecke der Nut 38
- 43: Erster Endabschnitt des Zwischenrings 1
- 44: Zweiter Endabschnitt des Zwischenrings 1
- 45: Fuge des Zwischenrings 1
- 46: Stoß des Zwischenrings 1
- 50: Öffnungsring
- 51: Erstes Loch der Führungshülse 3
- 52: Zweites Loch der Führungshülse 3
- 53: Hinterschneidung der Führungshülse 3
- 54: Drittes Loch der Führungshülse 3
- 55: Viertes Loch der Führungshülse 3
- 60: Zuspanneinrichtung
- 61: Drehhebel
- 62: Stift des Drehhebels 61
- 63: Spindel
- R: Rotationsrichtung
- D: Drehbewegung
- F: Kraft des Drehhebels 61
- KF: Kraft der Führungshülse 3
- FZ: Kraft des Zwischenrings 1
- S: Spiel zwischen der Schlingfeder 4 und der Führungshülse 3
- SR: Sperrichtung

### Bezugszeichenliste für eine Scheibenbremse mit einer Zustelleinrichtung nach Fig. 1

- 200: Scheibenbremse
- 201: Bremsträger
- 202: Bremssattel
- 203a: erster Belagträger
- 203b: zweiter Belagträger
- 204a: erster Reibbelag
- 204b: zweiter Reibbelag
- 205a: erste Niederhaltefeder
- 205b: zweite Niederhaltefeder
- 206: Niederhaltebügel
- 211: Niederhaltesystem
- 212: erster Bremsbelag
- 213: zweiter Bremsbelag
- 220: Nachstellvorrichtung
- 260: Zuspanneinrichtung
- 261: Drehhebel

## Patentansprüche

1. Nachstellvorrichtung (20) für eine Scheibenbremse (200), zum Nachstellen des Verschleißes bei Bremsbelägen, umfassend eine Führungshülse (3), in der eine Schlingfeder (4) angeordnet ist, einen Nutring (5), der die Führungshülse (3) umgreift, wobei der Nutring (5) über eine Torsionsfeder (7) mit einer Verschlusskappe (6) gekoppelt ist und einen, den Nutring (5) umgreifenden Öffnungsring (50), **dadurch gekennzeichnet, dass** die Nachstellvorrichtung (20) einen Zwischenring (1) zur Überwindung eines Spiels S, zwischen der Führungshülse (3) und der Schlingfeder (4) aufweist.

2. Nachstellvorrichtung (20) für eine Scheibenbremse (200) nach Anspruch 1, **dadurch gekennzeichnet, dass** der Zwischenring (1) mindestens eine Nase (11) zum Abstützen der Schlingfeder (4) in Umfangsrichtung aufweist.

3. Nachstellvorrichtung (20) für eine Scheibenbremse (200) nach Anspruch 1 oder 2, **dadurch gekennzeichnet, dass** der Zwischenring (1) mindestens einen Anschlag (9) gegen ein Verdrehen des Nutrings (5) in Umfangsrichtung aufweist.

4. Nachstellvorrichtung (20) für eine Scheibenbremse (200) nach einem der vorangegangenen Ansprüche, **dadurch gekennzeichnet, dass** der Zwischenring (1) mindestens eine Begrenzung (10, 10a), zur Verhinderung einer Bewegung des Öffnungsrings (50) in axialer Richtung aufweist.

5. Nachstellvorrichtung (20) für eine Scheibenbremse (200) nach einem der vorangegangenen Ansprüche, **dadurch gekennzeichnet, dass** der Zwischenring (1) aus einem einzigen durchgängigen Formteil oder aus einem offenen Formteil besteht.

6. Nachstellvorrichtung (20) für eine Scheibenbremse (200) nach einem der vorangegangenen Ansprüche, **dadurch gekennzeichnet, dass** der Zwischenring (1) an der Innenfläche (36) mindestens
a) einen Vorsprung (12, 12a, 12b, 12c) zur Befestigung des Zwischenrings (1) an der Führungshülse (3), in radialer Richtung aufweist oder
b) die Führungshülse (3) an einem axialen Ende (23), in Umfangsrichtung, entgegengesetzt der Verschlusskappe (6), einen Flansch (15) aufweist, an dem sich der Zwischenring (1) abstützt, oder
c) über eine Schweißverbindung mit der Führungshülse (3) verbunden ist.

7. Verfahren zur Anordnung eines Zwischenrings (1) an einer Führungshülse (3) einer Nachstellvorrichtung nach Anspruch 1, **gekennzeichnet durch**,
a) Anordnen eines Zwischenrings (1) an einer Führungshülse (3) nach Anordnung einer Schlingfeder (4) in der Führungshülse (3) und vor Anordnung eines Nutrings (5),
b) Einführen einer Nase (11) des Zwischenrings (1) in eine U-förmige Erhebung (24) der Schlingfeder (4),
c) Zuspannen des Zwischenrings (1) in Umfangsrichtung und Schließen eines Spiels S zwischen der Führungshülse (3) und der Schlingfeder (4),
d) Einpressen des mindestens einen Vorsprung (12, 12a, 12b, 12c) in ein Loch (51, 52, 53, 54) der Führungshülse (3) oder
e) Abstützen des Zwischenrings (1) an dem Flansch (15) der Führungshülse (3), in axialer Richtung, oder
f) Verschweißen des Zwischenrings (1) mit der Führungshülse (3).

## Claims

1. An adjustment device (20) for a disc brake (200), for adjusting the wear for brake pads, comprising a guide sleeve (3), in which a wrap spring (4) is arranged, a groove ring (5), which encompasses the guide sleeve (3), wherein the groove ring (5) is coupled to a closure cap (6) via a torsion spring (7) and an opening ring (50) encompassing the groove ring (5), **characterized in that** the adjustment device (20) has an intermediate ring (1) for overcoming a play S between the guide sleeve (3) and the wrap spring (4).

2. The adjustment device (20) for a disc brake (200) according to claim 1, **characterized in that** the intermediate ring (1) has at least one lug (11) for supporting the wrap spring (4) in the circumferential direction.

3. The adjustment device (20) for a disc brake (200) according to claim 1 or 2, **characterized in that** the intermediate ring (1) has at least one stop (9) against a turning of the groove ring (5) in the circumferential direction.

4. The adjustment device (20) for a disc brake (200) according to any of the preceding claims, **characterized in that** the intermediate ring (1) has at least one delimiter (10, 10a) for preventing a movement of the opening ring (50) in the axial direction.

5. The adjustment device (20) for a disc brake (200) according to any of the preceding claims, **characterized in that** the intermediate ring (1) consists of a single continuous molded part or of an open molded part.

6. The adjustment device (20) for a disc brake (200) according to any of the preceding claims, **characterized in that** the intermediate ring (1) has at least the following on the inner surface (36)
a) a protrusion (12, 12a, 12b, 12c) for fastening the intermediate ring (1) on the guide sleeve (3) in the radial direction or
b) the guide sleeve (3) has on an axial end (23) in the circumferential direction, opposite the closure cap (6), a flange (15) on which the intermediate ring (1) is supported, or
c) is connected to the guide sleeve (3) via a welded joint/connection.

7. A method for arranging an intermediate ring (1) on a guide sleeve (3) of an adjustment device according to claim 1, **characterized by**
a) Arranging an intermediate ring (1) on a guide sleeve (3) after arranging a wrap spring (4) in the guide sleeve (3) and prior to arranging a groove ring (5),
b) Inserting a lug (11) of the intermediate ring (1) into a U-shaped elevation (24) of the wrap spring (4),
c) Tightening the intermediate ring (1) in the circumferential direction and closing a play S between the guide sleeve (3) and the wrap spring (4),
d) Pressing in the at least one protrusion (12, 12a, 12b, 12c) into a bore (51, 52, 53, 54) of the guide sleeve (3) or
e) Supporting the intermediate ring (1) on the flange (15) of the guide sleeve (3), in the axial direction, or
f) Welding the intermediate ring (1) with the guide sleeve (3) .

## Revendications

1. Dispositif d'ajustage (20) pour un frein à disque (200), destiné à ajuster l'usure pour des garnitures de frein, qui comprend une douille de guidage (3) dans laquelle est agencé un ressort enroulé (4), un anneau à lèvre (5) qui enserre la douille de guidage (3), dans lequel le collier à lèvre (5) est couplé à un capuchon de fermeture (6) via un ressort de torsion (7) et un anneau d'ouverture (50) qui enserre l'anneau à lèvre (5), **caractérisé en ce que** le dispositif d'ajustage (20) présente, entre la douille de guidage (3) et le ressort enroulé (4), un anneau intermédiaire (1) pour surmonter un jeu S.

2. Dispositif d'ajustage (20) pour un frein à disque (200) selon la revendication 1, **caractérisé en ce que** l'anneau intermédiaire (1) présente au moins un bec d'aigle (11) destiné à soutenir le ressort enroulé (4) dans la direction circonférentielle.

3. Dispositif d'ajustage (20) pour un frein à disque (200) selon la revendication 1 ou 2, **caractérisé en ce que** l'anneau intermédiaire (1) présente au moins une butée (9) contre une torsion de l'anneau à lèvre (5) dans la direction circonférentielle.

4. Dispositif d'ajustage (20) pour un frein à disque (200) selon l'une des revendications précédentes, **caractérisé en ce que** l'anneau intermédiaire (1) présente au moins une limitation (10, 10a) pour empêcher un déplacement de l'anneau d'ouverture (50) dans la direction axiale.

5. Dispositif d'ajustage (20) pour un frein à disque (200) selon l'une des revendications précédentes, **caractérisé en ce que** l'anneau intermédiaire (1) consiste en une unique pièce moulée uniforme ou en une pièce moulée ouverte.

6. Dispositif d'ajustage (20) pour un frein à disque (200) selon l'une des revendications précédentes, **caractérisé en ce que** l'anneau intermédiaire (1), contre la surface intérieure (36), au moins
a) présente dans la direction radiale une saillie (12, 12a, 12b, 12c) pour fixer l'anneau intermédiaire (1) contre la douille de guidage (3) ou
b) la douille de guidage (3) présente, contre une extrémité axiale (23) dans la direction circonférentielle, à l'opposé du capuchon de fermeture (6), une bride (15) contre laquelle s'appuie l'anneau intermédiaire (1), ou
c) est relié à la douille de guidage (3) via une liaison par soudure.

7. Procédé d'agencement d'un anneau intermédiaire (1) contre une douille de guidage (3) d'un dispositif d'ajustage selon la revendication 1, **caractérisé par** le fait de
a) agencer un anneau intermédiaire (1) contre une douille de guidage (3) après l'agencement d'un ressort enroulé (4) dans la douille de guidage (3) et avant l'agencement d'un collier à lèvre (5),
b) introduire un bec d'aigle (11) de l'anneau intermédiaire (1) dans une protubérance (24) en forme de U du ressort enroulé (4),
c) serrer l'anneau intermédiaire (1) dans la direction circonférentielle et fermer un jeu S entre la douille de guidage (3) et le ressort enroulé (4),
d) enfoncer la au moins une saillie (12, 12a, 12b, 12c) dans un trou (51, 52, 53, 54) de la douille de guidage (3) ou
e) appuyer, dans la direction axiale, l'anneau intermédiaire (1) contre la bride (15) de la douille de guidage (3), ou
f) souder l'anneau intermédiaire (1) avec la douille de guidage (3).
